# EUROPÄISCHE PATENTSCHRIFT

(11) **EP 2 609 347 B1**
(45) Veröffentlichungstag und Bekanntmachung des Hinweises auf die Patenterteilung: **17.12.2014**
(21) Anmeldenummer: 11725931.7
(22) Anmeldetag: 17.06.2011
(51) Int. Cl.: F16F 13/26

(54) **MOTORLAGER FÜR EIN KRAFTFAHRZEUG**
ENGINE MOUNTING FOR A MOTOR VEHICLE
SUPPORT DE MOTEUR POUR UN VÉHICULE AUTOMOBILE

(30) Priorität: 30.11.2010 DE 102010060885; 26.08.2010 DE 102010037178
(43) Veröffentlichungstag der Anmeldung: 03.07.2013
(73) Patentinhaber: ContiTech Vibration Control GmbH, 30165 Hannover (DE)
(72) Erfinder: HOLST, Meinert, 31515 Wunstorf (DE); MARIENFELD, Peter-Michael, 31608 Marklohe (DE)
(74) Vertreter: Finger, Karsten
(86) Internationale Anmeldenummer: PCT/EP2011/060086
(87) Internationale Veröffentlichungsnummer: WO 2012/025276

(56) Entgegenhaltungen:
- WO-A1-03/081080
- WO-A1-2005/088159
- DE-A1- 10 346 309
- JP-A- 2000 283 214
- US-A- 4 789 142

## Beschreibung

Die Erfindung betrifft ein schaltbares, hydraulisch dämpfendes Lager, insbesondere Motorlager für ein Kraftfahrzeug, das folgende Bestandteile enthält:
- eine mit einer Hydraulikflüssigkeit gefüllte Arbeitskammer,
- eine Ausgleichskammer, die über einen Kanal mit der Arbeitskammer verbunden ist,
- eine Trennwand, die die Arbeitskammer von der Ausgleichskammer trennt,
- mindestens eine ferromagnetische magnetische Membran, die in der Trennwand derart angeordnet ist, dass sie in Längsrichtung des Lagers auslenkbar ist,
- einen elektromagnetischen Schaltaktor, mit dem die Membran steuerbar ist.

Ein Motorlager der eingangs genannten Art ist aus der US 4,789,142 bekannt. Bei dem aus dieser Druckschrift bekannten Motorlager weist die Trennwand zusätzlich zu dem Kanal, durch den die Hydraulikflüssigkeit zwischen der Arbeitskammer und der Ausgleichskammer hin- und her strömen kann, eine Bypass-Öffnung auf. In der Bypass-Öffnung liegt die ferromagnetische Membran, die in Längsrichtung des Motorlagers gesehen einen oberen und unteren Anschlag hat. Unterhalb der Membran und unterhalb der Ausgleichskammer ist ein elektromagnetischer Schaltaktor in Form einer elektrisch leitenden Spule angeordnet, mit dem die Membran gesteuert werden kann. So kann die Spule derart bestromt werden, dass sich die Membran entweder in ihrer unteren oder in ihrer oberen Anschlagsposition befindet, in der die Bypass Öffnung jeweils verschlossen ist. Darüber hinaus ist es möglich, die Spule derart zu bestromen, dass die Membran jede beliebige Position zwischen der unteren und der oberen Anschlagsposition einnimmt. Die Membran gibt dann die Bypass-Öffnung frei, so dass Hydraulikflüssigkeit zwischen der Arbeitskammer und der Ausgleichskammer hin- und her strömen kann. Durch gezielte Einstellung der Position der Membran zwischen dem oberen und dem unteren Anschlag mit Hilfe der Spule kann darüber hinaus das Volumen der Arbeitskammer an die aktuellen Anforderungen an das Motorlager angepasst werden. Mit dem aus der US 4,789,142 bekannten Hydrolager können niedrigfrequente Schwingungen gedämpft werden, indem Hydraulikflüssigkeit über den Kanal zwischen der Arbeitskammer und der Ausgleichskammer des Motorlagers hin- und her strömt. Darüber hinaus können hochfrequente Schwingungen, die in das Motorlager eingeleitet werden, dadurch von der Karosserie des Kraftfahrzeuges ferngehalten werden, dass mit Hilfe der ferromagnetischen Membran der Bypass geöffnet wird und die Membran so durch die Spule angesteuert wird, dass das Volumen der Arbeitskammer annähernd konstant bleibt. Es ist jedoch festzustellen, dass die Spule des elektromagnetischen Schaltaktors ständig bestromt werden muss, um die Membran zu steuern. Dies gilt sowohl für den Fall, dass die Membran in der oberen oder der unteren Anschlagposition gehalten werden soll, als auch für den Fall, dass die Membran zwischen diesen Positionen gehalten werden soll. Dies führt zu einem hohen Stromverbrauch des elektromagnetischen Schaltaktors.

Der Erfindung liegt die Aufgabe zugrunde, ein schaltbares, hydraulisch dämpfendes Lager, insbesondere ein Motorlager für ein Kraftfahrzeug, zu schaffen, das einen niedrigen Stromverbrauch hat.

Die Aufgabe wird gemäß den kennzeichnenden Merkmalen des Anspruchs 1 dadurch gelöst, dass der Schaltaktor derart ausgebildet ist, dass er im stromlosen Zustand eine magnetische Haltekraft auf die Membran ausübt und die Membran in einer Ruhelage fixiert und er im stromführenden Zustand die magnetische Haltekraft soweit reduziert, dass die Membran für eine Bewegung in Längsrichtung des Lagers freigegeben wird.

Der Vorteil der Erfindung ist darin zu sehen, dass der elektromagnetische Schaltaktor und damit das schaltbare Lager nur einen geringen Stromverbrauch haben. Dies wird verständlich, wenn man das Folgende berücksichtigt: Schwingungen im Fahrbetrieb des Fahrzeuges werden mit Hilfe des schaltbaren Lagers dadurch gedämpft, das Hydraulikflüssigkeit über den Kanal zwischen der Arbeitskammer und der Ausgleichskammer hin- und her strömt. Schwingungen im Leerlauf des Fahrzeuges (im Folgenden als Leerlaufschwingungen bezeichnet; diese entstehen bei laufendem Motor z.B. dann, wenn dass Fahrzeug im Leerlauf an einer roten Ampel steht), die auf das Lager einwirken, werden hingegen mit Hilfe der Membran beeinflusst, die dazu in Längsrichtung des Lagers frei beweglich sein muss. Im normalen Fahrbetrieb wird eine Bewegungsfreiheit der Membran nicht benötigt wird, so dass sie in ihrer Ruhelage fixiert sein kann. Erfindungsgemäß benötigt der elektromagnetische Schaltaktor dann keinen Strom. Vielmehr benötigt der elektromagnetische Schaltaktor nur Strom, wenn Leerlaufschwingungen auf das Motorlager einwirken.

Eine Weiterbildung nach Anspruch 2 ist dadurch gekennzeichnet, dass der Schaltaktor folgende Bestandteile enthält:
- einen Permanentmagneten,
- ferromagnetische Elemente,
- eine elektrisch leitfähige Spule, durch die im stromführenden Zustand des Schaltaktors ein Strom fließt,
wobei die genannten Bestandteile des Schaltaktors derart zueinander angeordnet sind, dass sich im stromlosen Zustand des Schaltaktors der von dem Permanentmagneten ausgehende magnetische Fluss über die ferromagnetischen Elemente durch die Membran geführt wird, so dass die Membran durch die von dem Permanentmagneten ausgeübte Haltekraft angezogen wird, und dass im stromführenden Zustand des Schaltaktors der von dem Permanentmagneten ausgehende magnetische Fluss derart umgelenkt wird, dass der magnetische Fluss nicht durch die Membran geführt wird, so dass die von dem Permanentmagneten ausgeübte Haltekraft soweit reduziert ist, dass die Membran für eine Bewegung in Längsrichtung des Lagers freigegeben wird.

Der Vorteil dieser Weiterbildung ist darin zu sehen, dass die Membran mit Hilfe des Permanentmagneten sicher in ihrer Ruhelage fixiert werden kann, da mit Hilfe des Permanentmagneten eine große magnetische Kraft auf die Membran ausgeübt werden kann. Ein weiterer Vorteil der Weiterbildung ist, dass der Schaltaktor ein geringes Bauvolumen hat, da bereits mit einem kleinen Permanentmagneten eine ausreichend große magnetische Kraft auf die Membran ausgeübt werden kann.

Eine Weiterbildung der Erfindung nach Anspruch 3 ist dadurch gekennzeichnet, dass der Schaltaktor folgende Bestandteile enthält:
- einen Topf aus ferromagnetischem Material, auf dessen Boden der Permanentmagnet derart angeordnet ist, dass das Magnetfeld in dem Permanentmagneten in Längsrichtung des Topfes weist,
- einen ferromagnetischen Kern, der oberhalb des Permanentmagneten angeordnet ist, dessen Längsachse in Längsrichtung des Topfes weist und um dessen Längsachse die
Spule gewickelt ist, wobei zwischen dem Topf und dem Kern ein Luftspalt verbleibt, wobei der Schaltaktor derart in dem Lager ausgerichtet ist, dass die Spule zwischen der Membran und dem Permanentmagneten liegt und die Längsrichtung des Topfes parallel zur Längsrichtung des Lagers verläuft.

Der Vorteil dieser Weiterbildung ist darin zu sehen, dass der Schaltaktor einen kompakten Aufbau aufweist.

Gemäß einer Weiterbildung der Erfindung nach Anspruch 4 ist der Luftspalt zwischen dem Topf und dem Kern mit einer elektrisch isolierenden Vergussmasse vergossen. Der Vorteil dieser Weiterbildung ist darin zu sehen, dass die Spule in dem Schaltaktor durch die Vergussmasse sicher in ihrer Position fixiert wird. Ein weiterer Vorteil der Erfindung ist darin zu sehen, dass die Bestandteile des Schaltaktors durch die Vergussmasse vor Umwelteinflüssen geschützt sind.

Gemäß einer Weiterbildung der Erfindung nach Anspruch 5 ist der Schaltaktor auf der Seite der Trennwand angeordnet, die der Arbeitskammer abgewandt ist. Der Vorteil dieser Weiterbildung ist darin zu sehen, dass der Schaltaktor außerhalb der Arbeitskammer angeordnet ist und somit das Volumen der Arbeitskammer durch den Schaltaktor nicht reduziert wird.

Eine Weiterbildung der Erfindung nach Anspruch 6 ist dadurch gekennzeichnet, dass
- die Trennwand ein Oberteil und ein Unterteil enthält und einen Bypasskanal aufweist, der die Arbeitskammer mit der Ausgleichskammer verbindet,
- und dass die Membran in dem Bypasskanal liegt und in Querschnitt dem Querschnitt des Bypasskanals entspricht,
wobei die Membran den Bypasskanal in der Ruhelage sperrt und wobei die Bewegungsfreiheit der freigegebenen Membran in Längsrichtung des Bypasskanals durch das Oberteil und das Unterteil der Trennwand begrenzt ist.

Der Vorteil dieser Weiterbildung wird verständlich, wenn man folgendes berücksichtigt: im stromlosen Zustand des Schaltaktors kann sich die Membran in dem Bypasskanal frei bewegen. Da der Querschnitt der Membran jedoch dem Querschnitt des Bypasskanals entspricht, fließt bei einer Bewegung der Membran in dem Bypasskanal keine Hydraulikflüssigkeit von der Arbeitskammer in die Ausgleichskammer oder in umgekehrte Richtung. Vielmehr wird ausschließlich die Membran nach oben und nach unten bewegt. Ein Vorteil dieser Weiterbildung ist also darin zu sehen, dass mit Hilfe der in dem Bypasskanal frei beweglichen Membran ausschließlich eine Volumenveränderung der Arbeitskammer herbei geführt wird. Durch die Volumenveränderung der Arbeitskammer kann verhindert werden, dass Leerlaufschwingungen über das Motorlager in die Karosserie des Fahrzeuges eingeleitet werden. Ferner tritt keine dynamische flüssigkeitsbedingte Verhärtung der Arbeitskammer auf, da die Hydraulikflüssigkeit aus der Arbeitskammer abfließen kann.

Gemäß einer Weiterbildung der Erfindung nach Anspruch 7 ist die Membran in dem Bypasskanal von einer ringförmigen Entkopplungsmembran umgeben, die zwischen dem Oberteil und dem Unterteil der Trennwand liegt. Der Vorteil dieser Weiterbildung ist darin zu sehen, dass mit Hilfe der ringförmigen Entkopplungsmembran Schwingungen in einem anderen Frequenzbereich beeinflusst werden können, als es mit der Membran möglich ist, die mit Hilfe des elektromagnetischen Schaltaktors angesteuert wird. Das schaltbare Lager wird somit in seiner Wirkung breitbandiger.

Gemäß einer Weiterbildung der Erfindung nach Anspruch 8 ist die Membran scheibenförmig ausgebildet und an ihrem Rand zwischen einem Oberteil und einem Unterteil der Trennwand eingespannt, wobei die Membran auf der Oberfläche, die der Arbeitskammer zugewandt ist, mit Hydraulikflüssigkeit beaufschlag ist, und auf der Oberfläche, die der Arbeitskammer abgewandt ist, mit Luft beaufschlagt ist. Der Vorteil dieser Weiterbildung ist darin zu sehen, dass das Lager bei Leerlaufschwingungen keine dynamische Verhärtung aufweist, da die Luft unter der Membran kompressibel ist.

Gemäß einer Weiterbildung der Erfindung nach Anspruch 9 ist die Membran in Gummi eingebettet. Der Vorteil dieser Weiterbildung ist darin zu sehen, dass die Membran keine Geräusche verursacht, wenn sie an andere Bestandteile des Schaltaktors, z.B. an die Trennwand anschlägt.

Gemäß einer Weiterbildung der Erfindung nach Anspruch 10 ist in der Trennwand eine zweite Membran angeordnet, die in Längsrichtung des Lagers auslenkbar ist und die das Volumen der Arbeitskammer beeinflusst, wobei zwischen der ersten Membran und der zweiten Membran eine Luftkammer angeordnet ist, die im stromlosen Zustand des Schaltaktors luftdicht zur Atmosphäre abgeschlossen ist und die im stromführenden Zustand des Schaltaktors mit der Atmosphäre in Verbindung steht. Das schaltbare Lager ist verhärtet, wenn die Luftkammer zur Atmosphäre luftdicht abgeschlossen ist, da sich in diesem Zustand des Lagers die zweite Membran nur geringfügig bewegen kann. Im Gegensatz dazu weist das schaltbare Lager eine weiche Charakteristik auf, wenn die Luftkammer mit der Atmosphäre in Verbindung steht, da sich die zweite Membran dann in Längsrichtung des Lagers entgegen dem Atmosphärenluftdruck bewegen kann. Wenn das schaltbare Lager als Motorlager für ein Kraftfahrzeug genutzt wird, wird die Luftkammer dann mit der Atmosphäre verbunden, wenn auf das Lager Leerlaufschwingungen einwirken. Der Vorteil der Weiterbildung ist darin zu sehen, dass die erste Membran und die zweite Membran voneinander entkoppelt sind. Dies führte dazu, dass die erste Membran mit kleinen Kräften gesteuert werden kann, da sie nicht den Kräften, die von der Ausgleichkammer auf die zweite Membran wirken, ausgesetzt ist. Dementsprechend braucht der Schaltaktor in dem Lager nur kleine Kräfte zu erzeugen und kann klein ausgebildet werden.

Gemäß einer Weiterbildung der Erfindung nach Anspruch 11 ist die erste Membran Bestandteil der Rollmembran, die das Volumen der Ausgleichkammer nach außen begrenzt. Der Vorteil dieser Weiterbildung ist darin zu sehen, dass die erste Membran als ein einziges Bauteil mit der Rollmembran in das Lager eingebracht werden kann, was die Produktion des Lagers vereinfacht. Ein weiterer Vorteil der Weiterbildung ist darin zu sehen, dass eine Rollmembran mit einer intrigierten ersten Membran zu geringen Kosten hergestellt werden kann.

Eine Weiterbildung der Erfindung nach Anspruch 12 ist dadurch gekennzeichnet, dass
- das Lager mindestens einen Belüftungsschlitz aufweist, über den die Luftkammer mit der Atmosphäre verbindbar ist, und dass
- die erste Membran mindestens ein Fenster aufweist, über das die Luftkammer mit dem Belüftungsschlitz verbindbar ist, und dass
- die erste Membran im stromlosen Zustand des Schaltaktors mit einer ringförmigen Dichtlippe derart auf einem Dichtsitz aufliegt, dass die Verbindung für die in der

Luftkammer befindliche Luft von dem Fenster zum Belüftungsschlitz gesperrt ist. Der Vorteil dieser Weiterbildung ist darin zu sehen, dass über den Querschnitt der Belüftungsschlitze die Dämpfungscharakteristik des Lagers im hochfrequenten Bereich eingestellt werden kann.

Gemäß einer Weiterbildung der Erfindung nach Anspruch 13 verläuft der mindestens eine Belüftungsschlitz radial außen am Topf des Schaltaktors. Der Vorteil dieser Weiterbildung ist darin zu sehen, dass die Belüftungsschlitze in direkter Nachbarschaft zu dem Schaltaktor liegen, so dass sie durch die Dichtlippe einfach von dem Fenster der ersten Membran getrennt werden können.

Ein Ausführungsbeispiel und weitere Vorteile der Erfindung werden im Zusammenhang mit den nachstehenden Figuren erläutert, darin zeigt:
- Fig. 1: ein schaltbares Lager,
- Fig. 2: den Schaltaktor,
- Fig. 3: ein schaltbares Lager
- Fig. 4: ein schaltbares Lager
- Fig. 5: einen Schnittentlang der Linie VN in Fig. 4b.

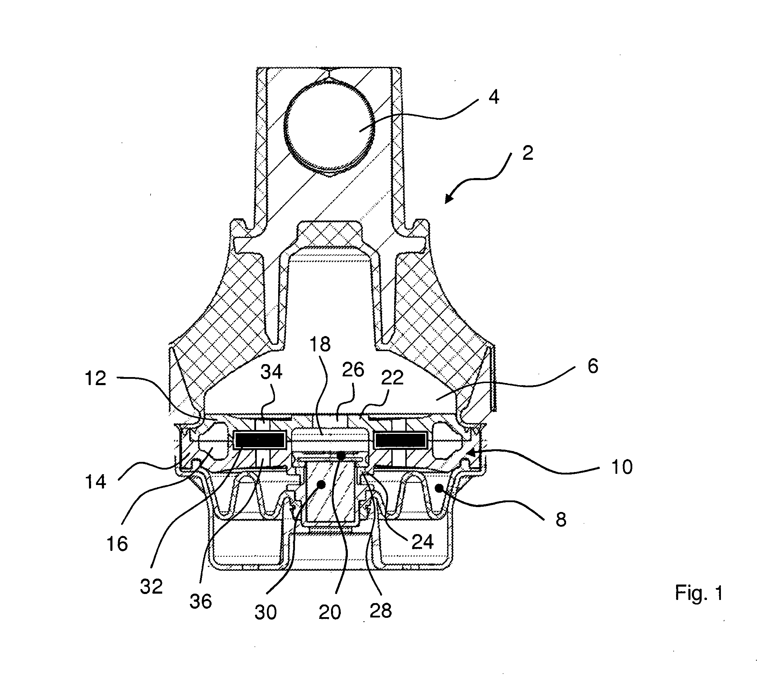

Fig. 1 zeigt ein schaltbares, hydraulisch dämpfendes Lager in Form eines schaltbaren Motorlagers für ein Kraftfahrzeug in schematischer Darstellung. Derartige Motorlager 2 sind an sich bekannt, so dass der grundsätzliche Aufbau hier nur kurz erläutert werden soll. Hierbei wird ausschließlich auf die Bestandteile des an sich bekannten Motorlagers eingegangen, die für die Erfindung relevant sind. Das Motorlager 2 ist rotationssymmetrisch zu seiner Längsachse und enthält einen Zapfen 4, an dem der Motor eines Kraftfahrzeuges aufgehängt wird. Ferner enthält das Motorlager 2 eine Arbeitskammer 6 und eine Ausgleichskammer 8, die jeweils mit Hydraulikflüssigkeit gefüllt und durch eine Trennwand 10 voneinander getrennt sind. Die Trennwand 10 besteht aus einem Oberteil 12 und einem Unterteil 14 und enthält einen Ringkanal 16, über den die Arbeitskammer 6 in an sich bekannter Art und Weise mit der Ausgleichskammer 8 verbunden ist. Darüber hinaus enthält die Trennwand 10 einen Bypasskanal 18. In dem Bypasskanal 18 liegt eine scheibenförmige Membran 20 aus Eisen oder einem anderen ferromagnetischen Material, deren Querschnitt dem Querschnitt des Bypasskanals 18 entspricht. Die Membran 20 ist in der Trennwand 10 bzw. in dem Bypasskanal 18 derart angeordnet, dass sie in Längsrichtung des Lagers auslenkbar ist. Hierbei wird der Bewegungsfreiraum der Membran 20 nach oben (also in Richtung der Arbeitskammer) durch einen Anschlag 22 an dem Oberteil 12 begrenzt. Zusätzlich wird der Bewegungsfreiraum der Membran nach unten (also in Richtung der Ausgleichskammer 8) durch einen Anschlag 24 am Unterteil 14 begrenzt. Die Oberfläche der Membran 20, die der Arbeitskammer 6 zugewandt ist, steht mit der Hydraulikflüssigkeit in der Arbeitskammer 6 durch die Öffnung 26 in dem Oberteil 12 in Verbindung. Ferner steht die Unterseite der Membran 20 über ein Ringkanal 28 mit der Hydraulikflüssigkeit in der Ausgleichskammer 8 in Verbindung.

Neben den bisher genannten Bestandteilen enthält das Motorlager ferner einen elektromagnetischen Schaltaktor 30, mit dem die ferromagnetische Membran 20 schaltbar ist. Der Schaltaktor 30 ist unterhalb der Membran 20 auf der Seite der Trennwand 10 angeordnet, die der Arbeitskammer 6 abgewandt ist. Er ist derart ausgebildet, dass er im stromlosen Zustand eine magnetische Haltekraft auf die Membran 20 ausübt und die Membran 20 in einer Ruhelage fixiert. Bei dem in der Figur 1 gezeigten Auführungsbeispiel des Motorlagers 2 liegt die Membran 20 in ihrer Ruhelage auf dem Anschlag 24 des Unterteils 14 der Trennwand 10 auf, so dass der Bypasskanal 18 versperrt ist. Ferner ist der Schaltaktor 30 derart ausgebildet, dass er im stromführenden Zustand die magnetische Haltekraft soweit reduziert, dass die Membran 20 für eine Bewegung in Längsrichtung des Motorlagers 2 freigegeben wird. Die Membran 20 kann sich dann frei zwischen dem Anschlag 22 und dem Anschlag 24 bewegen und gibt den Bypasskanal 18 frei.

Zusätzlich zu den bisher genannten Bestandteilen enthält das Motorlager 2 eine ringförmige Entkopplungsmembran 32, die zwischen dem Oberteil 12 und dem Unterteil 14 der Trennwand 10 liegt und die magnetische Membran 20 umfasst. Die Oberseite der Entkopplungsmembran 32 wird durch Fenster 34 in dem Oberteil 12 mit der Hydraulikflüssikeit in der Arbeitskammer 6 beaufschlagt. Die Unterseite der Entkopplungsmembran 32 wird durch Fenster 36 in dem Unterteil 14 mit der Hydraulikflüssigkeit in der Ausgleichskammer 8 beaufschlagt.

Die Funktionsweise des schaltbaren Motorlagers ist wie folgt: wenn im normalen Fahrbetrieb über den (nicht gezeigten) Motor Schwingungen in das Motorlager 2 eingeleitet werden, wird Hydraulikflüssigkeit von der Arbeitskammer 6 über den Ringkanal 16 in die Ausgleichskammer 8 (bzw. in umgekehrter Richtung) überführt. Hierbei werden aufgrund der Drosselwirkung des Ringkanals 16 die in das Lager eingeleiteten Schwingungen gedämpft. Während der Einleitung dieser Schwingungen wird die Membran 20 mit Hilfe des Schaltaktors 30 in ihrer Ruhelage fixiert und nimmt die in der Fig. 1 gezeigte Position ein. Der Bypasskanal 18 ist dann verschlossen. Für Leerlaufschwingungen, deren Frequenzen höher liegen, als die im normalen Fahrbetrieb auftretenden Schwingungen, ist der Ringkanal 16 dynamisch verschlossen, so dass dann keine Hydraulikflüssigkeit zwischen der Arbeitskammer 6 und der Ausgleichskammer 8 hin- und her transportiert werden kann. Während der Einleitung von Leerlaufschwingungen in das Motorlager 2 wird der Schaltaktor 30 in den stromführenden Zustand überführt, so dass sich die magnetische Haltekraft des Schaltaktors 30 soweit reduziert, dass die Membran 20 für eine Bewegung in Längsrichtung des Motorlagers 2 freigegeben wird. Die eingeleiteten Leerlaufschwingungen werden dann dadurch ausgeglichen, dass durch eine Bewegung der Membran 20 in dem Bypasskanal 18 das Volumen der Arbeitskammer 6 konstant gehalten wird. Dies erfolgt dadurch, dass die Membran 20 sich in dem Bypasskanal 18 frei auf und ab bewegt (das bedeutet, dass die Membran 20 ausschließlich durch den Druck, der von der Hydraulikflüssigkeit in der Arbeitskammer 6 bzw. in der Ausgleichskammer 8 auf die Membran 20 ausgeübt wird, auf und ab bewegt wird; die Bewegung der Membran 20 in dem Bypasskanal 18 wird im stromführenden Zustand des Schaltaktors 30 nicht durch diesen beeinflusst).

Schwingungen mit weiteren Frequenzen, die in das Motorlager 2 eingeleitet werden, können in an sich bekannter Art und Weise mit der Entkopplungsmembran 32 ausgeglichen werden.

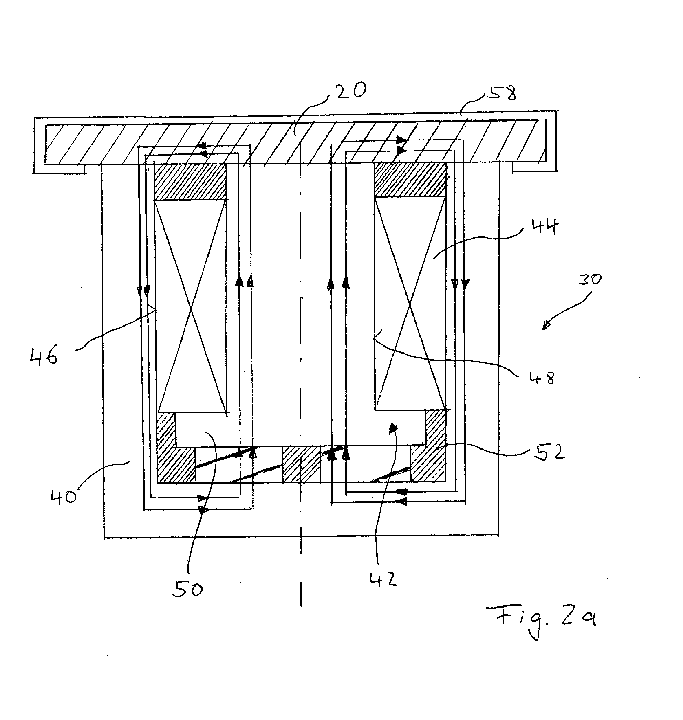

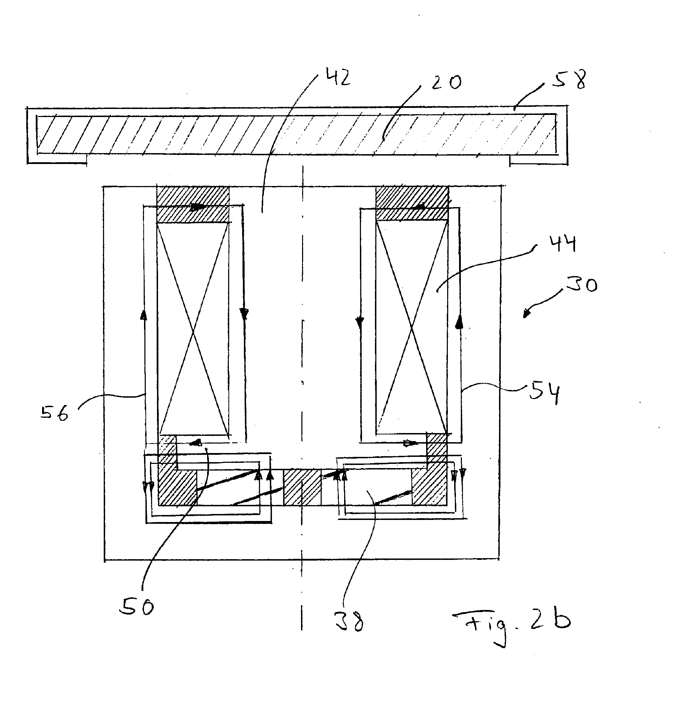

Fig. 2 zeigt den elektromagnetischen Schaltaktor 30, der rotationssymmetrisch zu seiner Längsachse ist, in schematischer Darstellung. Hierbei zeigt Fig. 2a den stromlosen Zustand des Schaltaktors 30 und die Fig. 2b den stromführenden Zustand des Schaltaktors 30. Der Schaltaktor 30 wird zunächst anhand der Fig. 2a erläutert. Er enthält einen ringförmigen Permanentmagneten 38, ein erstes ferromagnetisches Element in Form eines Topfes 40 und ein zweites ferromagnetisches Element in Form eines ferromagnetischen Kernes 42. Darüber hinaus enthält der Schaltaktor 30 eine elektrisch leitfähige Spule 44 (die stromzuführende Leitung zu der Spule und die stromableitende Leitung von der Spule sind nicht gezeigt). Der ringförmige Permanentmagnet 38 ist auf den Boden des Topfes 40 angeordnet. Auf dem Permanentmagneten 38 ist der ferromagnetische Kern 42 aufgebracht. Der Kern 42 schließt an seinem oberen Ende mit dem Topf 40 ab und ist in seiner Breite so bemessen, dass zwischen der Innenwand 46 des Topfes 40 und der Mantelfläche 48 des Kerns 42 ein Spalt verbleibt. Die Spule 44 ist um den Kern 42 gewickelt und füllt den Spalt zwischen der Innenwand 46 und der Mantelfläche 48 aus. Der Kern 42 enthält an seinem unteren Ende einen Kragen 46 der nach radial außen über die Mantelfläche 48 des Kerns 42 hinausragt. Im Bereich des Kragens 50 ist der Spalt zwischen der Innenwand 46 des Topfes 40 und der Mantelfläche 48 des Kerns 42 also deutlich kleiner als im übrigen Bereich des Kerns 42. Die Spule 44 liegt auf dem Kragen 50 auf. Die verbleibenden Hohlräume in dem Topf 40 werden mit einer Vergussmasse 52 vergossen.

Im Folgenden wird die Funktionsweise des Schaltaktors 30 im stromlosen Zustand erläutert: der Permanentmagnet 38 ist derart ausgebildet, dass das Magnetfeld in seinem Inneren parallel zur Längsachse des Schaltaktors 30 von unten nach oben verläuft (angedeutet durch die Pfeile im Permanentmagneten 38). Das von dem Permanentmagneten 38 erzeugte Magnetfeld wird im stromlosen Zustand des Schaltaktors im Inneren der Spule 44 durch den ferromagnetischen Kern 42 parallel zur Längsachse des Schaltaktors 30 geführt. Am oberen Ende des Topfes treten die Magnetfeldlinien aus dem Topf 40 aus und werden in der ferromagnetischen Membran 20 so umgelenkt, wie es in der Fig. 2a gezeigt ist. Radial außen treten die Magnetfeldlinien in den Topf 40 des Schaltaktors 30 ein und verlaufen parallel der Längsachse des Schaltaktors 30 bis zum unteren Ende des Topfes 40. Schließlich werden die Magnetfeldlinien im Boden des Topfes 40 so umgelenkt, wie es in der Fig. 2a gezeigt ist und treffen schließlich wieder auf den Permanentmagneten 38. Somit werden die von dem Permanentmagneten 38 ausgehenden Magnetfeldlinien über den Kern 42, die ferromagnetische Membran 20 und den Topf 40 geschlossen. Aufgrund der geschlossenen Magnetfeldlinien wird auf die Membran 20 eine magnetische Haltekraft ausgeübt, die die Membran 20 in der Ruhelage fixiert, in der sie, wie in der Fig. 2a gezeigt, auf dem Topf 40 aufliegt. Die radial äußeren Enden der Membran 20 liegen dann, wie in der Fig. 1 gezeigt, auf dem Anschlag 24 des Unterteils 14 der Trennwand 10 auf.

Im Zusammenhang mit der Fig. 2b wird im Folgenden erläutert, wie sich der Schaltaktor 30 im stromführenden Zustand verhält. Durch die Spule 44 wird derart ein Strom geschickt, dass durch die Spule 44 ein Magnetfeld aufgebaut wird, dass durch die Pfeile 54 und 56 angedeutet ist. Das Magnetfeld der Spule 44 verläuft in ihrem Inneren durch den Kern 42 vom oberen Ende zum unteren Ende des Topfes 40. Im Topf 40 verläuft das durch die Spule 44 erzeugte Magnetfeld von unten nach oben, so wie es auch durch die Magnetfeldlinien 54 und 56 angedeutet ist. Die Magnetfeldlinien 54, 56 werden an ihrem unteren Ende über den Kragen 50 und an ihrem oberen Ende über die Vergussmasse 52 geschlossen. Die durch die stromführenden Spule 44 erzeugten Magnetfeldlinien 54, 56 verlaufen also in ihrer Orientierung in der umgekehrten Richtung, wie die in der Fig. 2a gezeigten Magnetfeldlinien, die durch den Permanentmagneten 38 erzeugt werden. Dies führt dazu, dass die in der Fig. 2a gezeigten Magnetfeldlinien von den Magnetfeldlinien 54, 56 der Spule 44 verdrängt werden und nicht mehr durch den Kern 42 in die Membran 20 verlaufen können. Vielmehr werden die von den Permanentmagneten 38 ausgehende Magnetfeldlinien über den Kragen 50 kurzgeschlossen, verlaufen also ausgehend von den Permanentmagneten 38 durch den Kragen 50 in den Topf 40, den Boden des Topfes 40 und von dort zurück in den Permanentmagneten 38, sowie es in der Fig. 2b gezeigt ist. Durch diesen definierten Kurzschluss der Magnetfeldlinien über den Kragen 20 des Kerns 42 ist die magnetische Haltekraft des Permanentmagneten soweit reduziert, dass der Permanentmagnet 38 die Membran 20 nicht mehr in ihrer Ruhelage fixieren kann. Die Membran 20 wird auch nicht durch das Magnetfeld der Spule 44 in ihrer Ruhelage fixiert, da dies zu schwach ist. Die Membran 20 ist also für eine Bewegung in Längsrichtung des Lagers (siehe Fig. 1) freigegeben.

Die Überführung des Schaltaktors 30 von dem stromlosen Zustand in den stromführenden Zustand und umgekehrt wird nach Bedarf von einer Steuereinheit des Kraftfahrzeuges vorgenmmen, in das das Motorlager eingebaut ist.

Vorzugsweise ist die ferromagnetische Membran 20 in eine Gummischicht 58 eingebettet. Ferner ist der in der Fig.2 gezeigte Schaltaktor 30 derart in dem Motorlager 2 (s. Fig.1) angeordnet, dass die Spule 44 zwischen der Membran 20 und dem Permanentmagneten 38 liegt und die Längsrichtung des Topfes 40 parallel zur Längsrichtung des Lagers 2 verläuft.

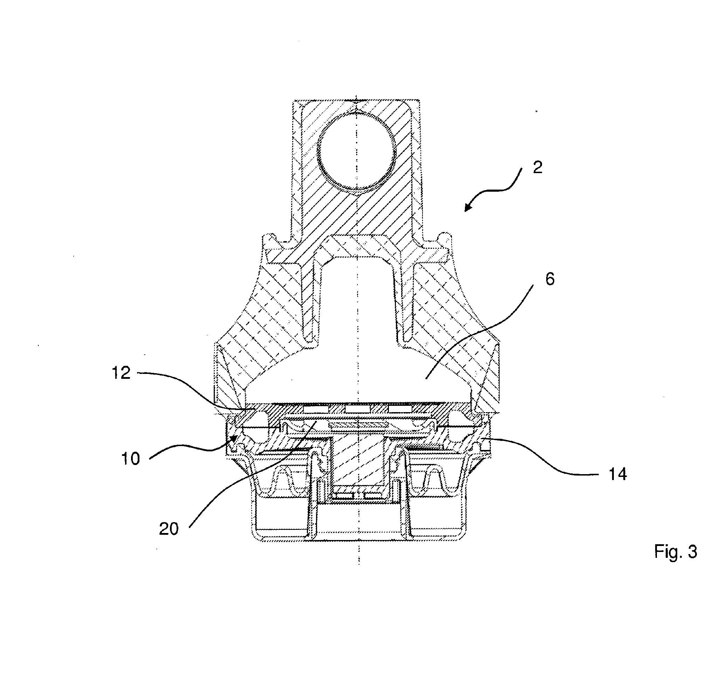

Fig. 3 zeigt ein Motorlager 2, das weitgehend genauso aufgebaut ist, wie das in der Fig. 1 gezeigte Motorlager 2. Insbesondere ist der Schaltaktor 30 genauso aufgebaut, wie es im Zusammenhang mit der Fig.2 erläutert worden ist. Der einzige Unterschied zum Motorlager 2 gemäß der Fig. 1 ist darin zu sehen, dass die scheibenförmige Membran 20 an ihrem Rand zwischen dem Oberteil 12 und dem Unterteil 14 der Trennwand 10 eingespannt ist, wobei die Membran 20 auf der Oberfläche, die der Arbeitskammer 6 zugewandt ist, mit Hydraulikflüssigkeit beaufschlag ist, und auf der Oberfläche, die der Arbeitskammer 6 abgewandt ist, mit Luft beaufschlagt ist. Ferner enthält das in der Fig.3 gezeigte Motorlager 2 keine zusätzliche Entkoppelungsmembran.

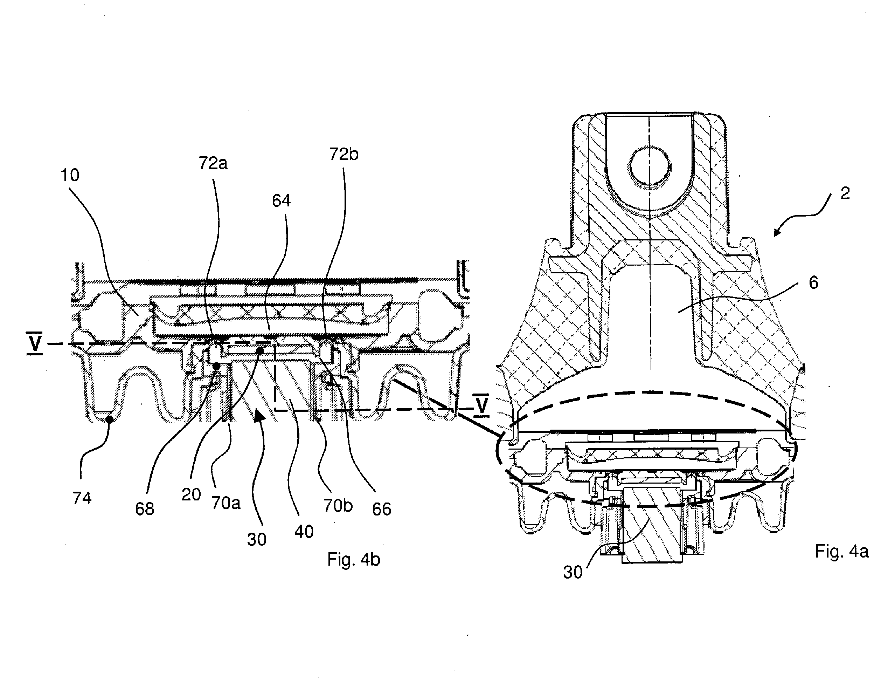

Fig. 4 zeigt ein Motorlager 2 mit einem Schaltaktor 30, der genauso aufgebaut ist, wie es im Zusammenhang mit den Fig. 1 bis 3 erläutert worden ist. Bei der nachfolgenden Figurenbeschreibung wird Bezug auf die Fig. 4b genommen, die einen vergrößerten Ausschnitt aus der Fig. 4a zeigt. Die Trennwand 10 des Schaltaktors 2 enthält eine erste Membran 20, die mit Hilfe des Schaltaktors 30 steuerbar ist. Die Membran 20 besteht aus einer kreisförmigen Metallplatte 60, die in das Elastomer der Membran 20 eingebettet ist. Ferner ist die erste Membran 20 integraler Bestandteil der Rollmembran 74, die die Ausgleichkammer 8 nach außen begrenzt. Zusätzlich zu der ersten Membran 20 enthält die Trennwand 10 eine zweite Membran 62, die in Längsrichtung des Motorlagers 2 auslenkbar ist und mit der das Volumen der Arbeitskammer 6 (siehe Fig. 4a) in an sich bekannter Art und Weise beeinflussbar ist. Zwischen der ersten Membran 20 und der zweiten Membran 62 ist eine Luftkammer 64 angeordnet. Die Luftkammer 64 ist im stromlosen Zustand des Schaltaktors 30 luftdicht zur Atmosphäre abgeschlossen. Die zweite Membran 62 muss bei einer Verformung des Arbeitskammer 6 (siehe Fig. 4a) dann gegen den Luftdruck in der Luftkammer 64 arbeiten, so dass das Motorlager 2 hart eingestellt ist. Im stromführenden Zustand des Schaltaktors 30 steht die Luftkammer 64 mit der Atmosphäre in Verbindung. Die zweite Membran 62 braucht dann bei einer Volumenänderung der Arbeitskammer 6 ausschließlich gegen den Atmosphärenluftdruck zu arbeiten, so dass das Motorlager 2 weich eingestellt ist.

Im Folgenden wird erläutert, wie die Luftkammer 64 luftdicht zur Atmosphäre abgeschlossen bzw. mit der Atmosphäre in Verbindung gebracht werden kann. Hierbei wird anhand der Fig. 4b zunächst der Zustand beschrieben, in dem die Luftkammer 64 luftdicht zur Atmosphäre abgeschlossen ist. In diesem Fall liegt eine ringförmige Dichtlippe 66 der ersten Membran 20 auf einem Dichtsitz 68, der den Schaltaktor 30 umfasst, auf. Im radial innen liegenden Bereich der Dichtlippe 66 befinden sich Belüftungsschlitze 70a und 70b, die radial außen am Topf 40 des Schaltaktors 30 in Längsrichtung des Lagers 2 entlang verlaufen. Die Belüftungsschlitze 70a und 70b stehen mit der Atmosphäre in Verbindung. Radial außerhalb der Dichtlippe 66 enthält die Membran 20 Fenster 70a, 70b. Im stromlosen Zustand des Aktors, wenn also die Membran 20 mit der Dichtlippe 66 auf dem Dichtsitz 68 aufsitzt, ist eine Verbindung der Fenster 72a, 72b zu den Belüftungsschlitzen 70a, 70b durch die ringförmige Dichtlippe 66 gesperrt. Dementsprechend kann keine Luft aus der Luftkammer 64 über die Belüftungsschlitze 70a, 70b in die Atmosphäre entweichen. Im stromführenden Zustand des Schaltaktors hebt die Dichtlippe 66 vom Dichtsitz 68 ab (dieser Zustand ist in der Fig. 4b gezeigt), so dass die Luftkammer 64 über die Fenster 72a, 72b und über die Belüftungsschlitze 70a, 70b mit der Atmosphäre in Verbindung steht.

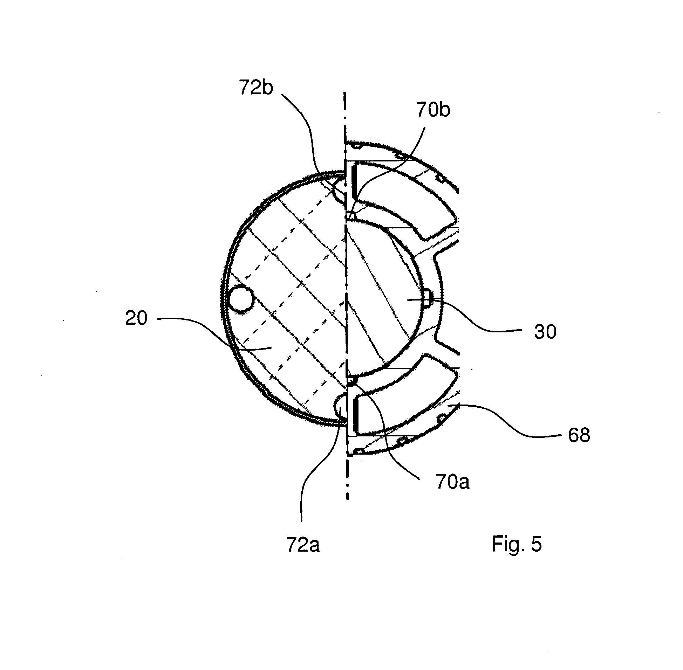

Fig. 5 zeigt einen Schnitt entlang der Linie V/V. Die Membran 20 enthält über ihren Umfang verteilt mehrere Fenster 72a, 72b (vorzugsweise enthält die Membran 20 mindestens vier Fenster 72). Ferner sind in unmittelbarer radialer Nachbarschaft zu dem Schaltaktor 30 über den Umfang verteilt mehrere Belüftungsschlitze 70a, 70b angeordnet (vorzugsweise sind über den gesamten Umfang in unmittelbarerer Nachbarschaft zu dem Schaltaktor 30 mindestens vier Belüftungsschlitze 70 angeordnet). Die Fenster 72 in der Membran 20 und die Belüftungsschlitze 70 sind so bemessen, dass die Querschnittfläche der Fenster in Summe größer ist, als die Querschnittfläche der Belüftungsschlitze in Summe. Hierdurch wird verhindert, dass Die Membran durch den Luftstrom auf den Dichtsitz 68 (s.Fig.4) gedrückt wird, wenn die Luft aus der Luftkammer 64 über die Fenster 72 und die Belüftungsschlitze 70 in die Atmosphäre entweicht.

### Bezugszeichenliste (Teil der Beschreibung)

- 2: Motorlager
- 4: Zapfen
- 6: Arbeitskammer
- 8: Ausgleichskammer
- 10: Trennwand
- 12: Oberteil
- 14: Unterteil
- 16: Ringkanal
- 18: Bypasskanal
- 20: Membran
- 22: Anschlag
- 24: Anschlag
- 26: Öffnung
- 28: Ringkanal
- 30: Schaltaktor
- 32: Entkopplungsmembran
- 34: Fenster
- 36: Fenster
- 38: Permanentmagnet
- 40: Topf
- 42: Kern
- 44: Spule
- 46: Innenwand
- 48: Mantelfläche
- 50: Kragen
- 52: Vergussmasse
- 54: Magnetfeldlinie
- 56: Magnetfeldlinie
- 58: Gummischicht
- 60: Metallplatte
- 62: Membran
- 64: Luftkammer
- 66: Dichtlippe
- 68: Dichtsitz
- 70a,b: Belüftungsschlitz
- 72a,b: Fenster
- 74: Rollmembran

## Patentansprüche

1. Schaltbares, hydraulisch dämpfendes Lager (2), insbesondere Motorlager für ein Kraftfahrzeug, das folgende Bestandteile enthält:
- eine mit einer Hydraulikflüssigkeit gefüllte Arbeitskammer (6),
- eine Ausgleichkammer (8), die über einen Kanal (28) mit der Arbeitskammer (6) verbunden ist,
- eine Trennwand (10), die die Arbeitskammer (6) von der Ausgleichkammer (8) trennt,
- mindestens eine ferromagnetische Membran (20), die in der Trennwand (10) derart angeordnet ist, dass sie in Längsrichtung des Lagers (2) auslenkbar ist,
- einen elektromagnetischen Schaltaktor (30), mit dem die Membran (20) steuerbar ist,
**dadurch gekennzeichnet, dass** der Schaltaktor (30) derart ausgebildet ist, dass er im stromlosen Zustand eine magnetische Haltekraft auf die Membran (20) ausübt und die Membran (20) in einer Ruhelage fixiert, und er im stromführenden Zustand die magnetische Haltekraft soweit reduziert, dass die Membran (20) für eine Bewegung in Längsrichtung des Lagers (2) freigeben wird.

2. Schaltbares Lager (2) nach Anspruch 1, **dadurch gekennzeichnet, dass** der Schaltaktor (30) folgende Bestandteile enthält:
- einen Permanentmagneten (38),
- ferromagnetische Elemente (40, 42),
- eine elektrisch leitfähige Spule (44), durch die im stromführenden Zustand des Schaltaktors (30) ein Strom fließt,
wobei die genannten Bestandteile des Schaltaktors (30) derart zueinander angeordnet sind, dass sich im stromlosen Zustand des Schaltaktors (30) der von dem Permanentmagneten (38) ausgehende magnetische Fluss über die ferromagnetischen Elemente (40, 42) durch die Membran (20) geführt wird, so dass die Membran (20) durch die von dem Permanentmagneten (20) ausgeübte Haltekraft angezogen wird, und dass im stromführenden Zustand des Schaltaktors (30) der von dem Permanentmagneten (38) ausgehende magnetische Fluss derart umgelenkt wird, dass der magnetische Fluss nicht durch die Membran (20) geführt wird, so dass die von dem Permanentmagneten (38) ausgeübte Haltekraft soweit reduziert ist, dass die Membran (20) für eine Bewegung in Längsrichtung des Lagers (2) freigeben wird.

3. Schaltbares Lager (2) nach Anspruch 2, **dadurch gekennzeichnet, dass** der Schaltaktor (30) folgende Bestandteile enthält:
- einen Topf (40) aus ferromagnetischem Material, auf dessen Boden der Permanentmagnet (38) derart angeordnet ist, dass das Magnetfeld in dem Permanentmagneten (38) in Längsrichtung des Topfes (40) weist,
- einen ferromagnetischen Kern (42), der oberhalb des Permanentmagneten (38) angeordnet ist, dessen Längsachse in Längsrichtung des Topfes (40) weist und um dessen Längsachse die Spule (44) gewickelt ist, wobei zwischen dem Topf (40) und dem Kern (42) ein Luftspalt verbleibt,
wobei der Schaltaktor (30) derart in dem Lager (2) ausgerichtet ist, dass die Spule (44) zwischen der Membran (20) und dem Permanentmagneten (38) liegt und die Längsrichtung des Topfes (40) parallel zur Längsrichtung des Lagers (2) verläuft.

4. Schaltbares Lager (2) nach Anspruch 3, **dadurch gekennzeichnet, dass** der Luftspalt zwischen dem Topf (40) und dem Kern (42) mit einer elektrisch isolierenden Vergußmasse vergossen ist.

5. Schaltbares Lager (2) nach einem der Ansprüche 1 bis 4, **dadurch gekennzeichnet, dass** der Schaltaktor (30) auf der Seite der Trennwand (10) angeordnet ist, die der Arbeitskammer (6) abgewandt ist.

6. Schaltbares Lager (2) nach einem der Ansprüche 1 bis 5, **dadurch gekennzeichnet, dass**
- die Trennwand (10) ein Oberteil (12) und ein Unterteil (14) enthält und einen Bypasskanal (18) aufweist, der die Arbeitskammer (6) mit der Ausgleichkammer (8) verbindet,
- und dass die Membran (20) in dem Bypasskanal (18) liegt und ihr Querschnitt dem Querschnitt des Bypasskanals (18) entspricht, wobei die Membran (20) den Bypasskanal (18) in der Ruhelage sperrt und wobei die Bewegungsfreiheit der freigegebenen Membran (20) in Längsrichtung des Bypasskanals (18) durch das Oberteil (12) und das Unterteil (14) der Trennwand (10) begrenzt ist.

7. SchaltbaresLager (2) nach Anspruch 6, **dadurch gekennzeichnet, dass** die Membran (20) in dem Bypasskanal (18) von einer ringförmigen Entkoppelungsmembran (32) umgeben ist, die zwischen dem Oberteil (12) und dem Unterteil (14) der Trennwand (10) liegt.

8. Schaltbares Lager (2) nach einem der Ansprüche 1 bis 5, **dadurch gekennzeichnet, dass** die Membran (20) scheibenförmig ausgebildet ist und an ihrem Rand zwischen einem Oberteil (12) und einem Unterteil (14) der Trennwand (10) eingespannt ist und auf der Oberfläche, die der Arbeitskammer (6) zugewandt ist, mit Hydraulikflüssigkeit beaufschlagt ist, und auf der Oberfläche, die der Arbeitskammer (6) abgewandt ist, mit Luft beaufschlagt ist.

9. Schaltbares Lager (2) nach einem der Ansprüche 1 bis 8, **dadurch gekennzeichnet, dass** die Membran (20) in Gummi eingebettet ist.

10. Schaltbares Lager (2) nach einem der Ansprüche 1 bis 5, **dadurch gekennzeichnet, dass** in der Trennwand (10) eine zweite Membran (62) angeordnet ist, die in Längsrichtung des Lagers (2) auslenkbar ist und die das Volumen der Arbeitskammer (6) beeinflusst, wobei zwischen der ersten Membran (20) und der zweiten Membran eine Luftkammer (64) angeordnet ist, die im stromlosen Zustand des Schaltaktors (30) luftdicht zur Atmosphäre abgeschlossen ist und die im stromführenden Zustand des Schaltaktors (30) mit der Atmosphäre in Verbindung steht.

11. Schaltbares Lager (2) nach Anspruch 10, **dadurch gekennzeichnet, dass** die erste Membran (20) Bestandteil der Rollmembran (74) ist, die das Volumen der Ausgleichkammer (8) nach außen begrenzt.

12. Schaltbares Lager (2) nach einem der Ansprüche 10 bis 11, **dadurch gekennzeichnet, dass**
- das Lager (2) mindestens einen Belüftungsschlitz (70a, 70b) aufweist, über den die Luftkammer mit der Atmosphäre verbindbar ist, und dass
- die erste Membran (20) mindestens ein Fenster (72a, 72b) aufweist, über das die Luftkammer (64) mit dem Belüftungsschlitz (70a, 70b) verbindbar ist, und dass
- die erste Membran (20) im stromlosen Zustand des Schaltaktors (30) mit einer ringförmigen Dichtlippe (66) derart auf einem Dichtsitz (68) aufliegt, dass die Verbindung für die in der Luftkammer (64) befindlichen Luft von dem Fenster (72a, 72b) zum Belüftungsschlitz (70a, 70b) gesperrt ist.

13. Schaltbares Lager (2) nach Anspruch 12, **dadurch gekennzeichnet, dass** der mindestens eine Belüftungsschlitz (70a, 70b) radial außen am Topf (40) des Schaltaktors (30) verläuft.

## Claims

1. Switchable, hydraulically damping mount (2), in particular engine mount for a motor vehicle, which comprises the following constituent parts:
- a working chamber (6) which is filled with a hydraulic fluid,
- a compensation chamber (8) which is connected to the working chamber (6) via a duct (28),
- a partition (10) which separates the working chamber (6) from the compensation chamber (8),
- at least one ferromagnetic diaphragm (20) which is arranged in the partition (10) in such a way that it can be deflected in the longitudinal direction of the mount (2),
- an electromagnetic switching actuator (30) by means of which the diaphragm (20) can be controlled,
**characterized in that** the switching actuator (30) is formed such that, in the deenergized state, it exerts a magnetic holding force on the diaphragm (20) and fixes the diaphragm (20) in a rest position, and in the energized state, it reduces the magnetic holding force to such an extent that the diaphragm (20) is released for a movement in the longitudinal direction of the mount (2).

2. Switchable mount (2) according to Claim 1, **characterized in that** the switching actuator (30) comprises the following constituent parts:
- a permanent magnet (38),
- ferromagnetic elements (40, 42),
- an electrically conductive coil (44) through which an electrical current flows when the switching actuator (30) is in the energized state,
wherein said constituent parts of the switching actuator (30) are arranged relative to one another such that, when the switching actuator (30) is in the deenergized state, the magnetic flux originating from the permanent magnet (38) is conducted via the ferromagnetic elements (40, 42) through the diaphragm (20), such that the diaphragm (20) is attracted by the holding force exerted by the permanent magnet (38), and that, when the switching actuator (30) is in the energized state, the magnetic flux originating from the permanent magnet (38) is diverted in such a way that the magnetic flux is not conducted through the diaphragm (20), such that the holding force exerted by the permanent magnet (38) is reduced to such an extent that the diaphragm (20) is released for a movement in the longitudinal direction of the mount (2).

3. Switchable mount (2) according to Claim 2, **characterized in that** the switching actuator (30) comprises the following constituent parts:
- a pot (40) which is composed of ferromagnetic material and on the base of which the permanent magnet (38) is arranged in such a way that the magnetic field in the permanent magnet (38) points in the longitudinal direction of the pot (40),
- a ferromagnetic core (42) which is arranged above the permanent magnet (38), the longitudinal axis of which points in the longitudinal direction of the pot (40) and around the longitudinal axis of which the coil (44) is wound, wherein an air gap remains between the pot (40) and the core (42),
wherein the switching actuator (30) is aligned in the mount (2) in such a way that the coil (44) is situated between the diaphragm (20) and the permanent magnet (38) and the longitudinal direction of the pot (40) runs parallel to the longitudinal direction of the mount (2).

4. Switchable mount (2) according to Claim 3, **characterized in that** the air gap between the pot (40) and the core (42) is sealed by means of an electrically insulating sealing compound.

5. Switchable mount (2) according to one of Claims 1 to 4, **characterized in that** the switching actuator (30) is arranged on that side of the partition (10) which faces away from the working chamber (6).

6. Switchable mount (2) according to one of Claims 1 to 5, **characterized in that**
- the partition (10) comprises an upper part (12) and a lower part (14) and has a bypass duct (18) which connects the working chamber (6) to the compensation chamber (8),
- and **in that** the diaphragm (20) is situated in the bypass duct (18) and the cross section of said diaphragm corresponds to the cross section of the bypass duct (18), wherein the diaphragm (20), when in the rest position, blocks the bypass duct (18), and wherein the freedom of movement of the released diaphragm (20) in the longitudinal direction of the bypass duct (18) is delimited by the upper part (12) and the lower part (14) of the partition (10).

7. Switchable mount (2) according to Claim 6, **characterized in that** the diaphragm (20) in the bypass duct (18) is surrounded by an annular decoupling diaphragm (32) which is situated between the upper part (12) and the lower part (14) of the partition (10).

8. Switchable mount (2) according to one of Claims 1 to 5, **characterized in that** the diaphragm (20) is of disk-shaped form and is clamped at its edge between an upper part (12) and a lower part (14) of the partition (10) and is acted on with hydraulic fluid on the surface facing toward the working chamber (6) and is acted on with air on the surface facing away from the working chamber (6).

9. Switchable mount (2) according to one of Claims 1 to 8, **characterized in that** the diaphragm (20) is embedded in rubber.

10. Switchable mount (2) according to one of Claims 1 to 5, **characterized in that** there is arranged in the partition (10) a second diaphragm (62) which can be deflected in the longitudinal direction of the mount (2) and which influences the volume of the working chamber (6), wherein between the first diaphragm (20) and the second diaphragm there is arranged an air chamber (64) which is closed off in an air-tight manner with respect to the atmosphere when the switching actuator (30) is in the deenergized state and which is connected to the atmosphere when the switching actuator (30) is in the energized state.

11. Switchable mount (2) according to Claim 10, **characterized in that** the first diaphragm (20) is a constituent part of the rolling diaphragm (74) which delimits the volume of the compensation chamber (8) to the outside.

12. Switchable mount (2) according to either of Claims 10 and 11, **characterized in that**
- the mount (2) has at least one ventilation slot (70a, 70b) via which the air chamber can be connected to the atmosphere, and **in that**
- the first diaphragm (20) has at least one window (72a, 72b) via which the air chamber (64) can be connected to the ventilation slot (70a, 70b), and **in that**,
- when the switching actuator (30) is in the deenergized state, the first diaphragm (20) bears with an annular sealing lip (66) against a sealing seat (68) in such a way that the connection for the air situated in the air chamber (64) from the window (72a, 72b) to the ventilation slot (70a, 70b) is blocked.

13. Switchable mount (2) according to Claim 12, **characterized in that** the at least one ventilation slot (70a, 70b) runs radially at the outside on the pot (40) of the switching actuator (30).

## Revendications

1. Palier commutable, à amortissement hydraulique (2), en particulier palier de moteur pour un véhicule automobile, comprenant les composants suivantes :
- une chambre de travail (6) remplie d'un fluide hydraulique,
- une chambre de compensation (8) qui est connectée par le biais d'un canal (28) à la chambre de travail (6),
- une cloison (10) qui sépare la chambre de travail (6) de la chambre de compensation (8),
- au moins une membrane ferromagnétique (20) qui est disposée dans la cloison (10) de telle sorte qu'elle puisse être déviée dans la direction longitudinale du palier (2),
- un actionneur de commutation électromagnétique (30) avec lequel la membrane (20) peut être commandée,
**caractérisé en ce que** l'actionneur de commutation (30) est réalisé de telle sorte qu'il exerce dans l'état non alimenté en courant une force de retenue magnétique sur la membrane (20) et qu'il fixe la membrane (20) dans une position de repos, et qu'il réduit, dans l'état alimenté en courant, la force de retenue magnétique dans une mesure telle que la membrane (20) soit libérée en vue d'un mouvement dans la direction longitudinale du palier (2).

2. Palier commutable (2) selon la revendication 1, **caractérisé en ce que** l'actionneur de commutation (30) comprend les composants suivants :
- un aimant permanent (38),
- des éléments ferromagnétiques (40, 42),
- une bobine électriquement conductrice (44) à travers laquelle s'écoule un courant dans l'état alimenté en courant de l'actionneur de commutation (30),
lesdits composants de l'actionneur de commutation (30) étant disposés les uns par rapport aux autres de telle sorte que dans l'état non alimenté en courant de l'actionneur de commutation (30), le flux magnétique partant de l'aimant permanent (38) soit guidé par le biais des éléments ferromagnétiques (40, 42) à travers la membrane (20), de telle sorte que la membrane (20) soit attirée par la force de retenue exercée par l'aimant permanent (38), et de telle sorte que dans l'état alimenté en courant de l'actionneur de commutation (30), le flux magnétique partant de l'aimant permanent (38) soit dévié de telle sorte que le flux magnétique ne soit pas guidé à travers la membrane (20), de sorte que la force de retenue exercée par l'aimant permanent (38) soit réduite dans une mesure telle que la membrane (20) soit libérée en vue d'un mouvement dans la direction longitudinale du palier (2).

3. Palier commutable (2) selon la revendication 2, **caractérisé en ce que** l'actionneur de commutation (30) comprend les composants suivants :
- un pot (40) en matériau ferromagnétique, sur le fond duquel est disposé l'aimant permanent (38), de telle sorte que le champ magnétique soit orienté dans l'aimant permanent (38) dans la direction longitudinale du pot (40),
- un noyau ferromagnétique (42) qui est disposé au-dessus de l'aimant permanent (38), dont l'axe longitudinal est orienté dans la direction longitudinale du pot (40) et autour de l'axe longitudinal duquel est enroulée la bobine (44), un entrefer subsistant entre le pot (40) et le noyau (42),
l'actionneur de commutation (30) étant orienté dans le palier (2) de telle sorte que la bobine (44) soit située entre la membrane (20) et l'aimant permanent (38) et que la direction longitudinale du pot (40) s'étende parallèlement à la direction longitudinale du palier (2).

4. Palier commutable (2) selon la revendication 3, **caractérisé en ce que** l'entrefer entre le pot (40) et le noyau (42) est coulé avec une masse de scellement électriquement isolante.

5. Palier commutable (2) selon l'une quelconque des revendications 1 à 4, **caractérisé en ce que** l'actionneur de commutation (30) est disposé du côté de la cloison (10) qui est opposé à la chambre de travail (6).

6. Palier commutable (2) selon l'une quelconque des revendications 1 à 5, **caractérisé en ce que**
- la cloison (10) comprend une partie supérieure (12) et une partie inférieure (14) et présente un canal de dérivation (18) qui relie la chambre de travail (6) à la chambre de compensation (8),
- et **en ce que** la membrane (20) est située dans le canal de dérivation (18) et sa section transversale correspond à la section transversale du canal de dérivation (18), la membrane (20) bloquant le canal de dérivation (18) dans la position de repos et la liberté de mouvement de la membrane libérée (20) dans la direction longitudinale du canal de dérivation (18) étant limitée par la partie supérieure (12) et la partie inférieure (14) de la cloison (10).

7. Palier commutable (2) selon la revendication 6, **caractérisé en ce que** la membrane (20) dans le canal de dérivation (18) est entourée par une membrane de découplage annulaire (32) qui est située entre la partie supérieure (12) et la partie inférieure (14) de la cloison (10).

8. Palier commutable (2) selon l'une quelconque des revendications 1 à 5, **caractérisé en ce que** la membrane (20) est réalisée en forme de disque et est serrée, au niveau de son bord, entre une partie supérieure (12) et une partie inférieure (14) de la cloison (10) et, sur la surface qui est tournée vers la chambre de travail (6), est sollicitée avec du fluide hydraulique et, sur la surface qui est opposée à la chambre de travail (6), est sollicitée avec de l'air.

9. Palier commutable (2) selon l'une quelconque des revendications 1 à 8, **caractérisé en ce que** la membrane (20) est noyée dans du caoutchouc.

10. Palier commutable (2) selon l'une quelconque des revendications 1 à 5, **caractérisé en ce qu'**une deuxième membrane (62) est disposée dans la cloison (10), laquelle peut être déviée dans la direction longitudinale du palier (2) et influence le volume de la chambre de travail (6), une chambre à air (64) étant disposée entre la première membrane (20) et la deuxième membrane, laquelle, dans l'état non alimenté en courant de l'actionneur de commutation (30), est fermée de manière étanche à l'air par rapport à l'atmosphère et, dans l'état alimenté en courant de l'actionneur de commutation (30), est en liaison avec l'atmosphère.

11. Palier commutable (2) selon la revendication 10, **caractérisé en ce que** la première membrane (20) fait partie de la membrane déroulante (74) qui limite le volume de la chambre de compensation (8) vers l'extérieur.

12. Palier commutable (2) selon l'une quelconque des revendications 10 à 11, **caractérisé en ce que**
- le palier (2) présente au moins une fente de ventilation (70a, 70b) par le biais de laquelle la chambre à air peut être connectée à l'atmosphère, et **en ce que**
- la première membrane (20) présente au moins une fenêtre (72a, 72b) par le biais de laquelle la chambre à air (64) peut être connectée à la fente de ventilation (70a, 70b) et **en ce que**
- la première membrane (20), dans l'état non alimenté en courant de l'actionneur de commutation (30), s'applique avec une lèvre d'étanchéité annulaire (66) contre un siège d'étanchéité (68) de telle sorte que la connexion pour l'air se trouvant dans la chambre à air (64) depuis la fenêtre (72a, 72b) vers la fente de ventilation (70a, 70b) soit bloquée.

13. Palier commutable (2) selon la revendication 12, **caractérisé en ce que** l'au moins une fente de ventilation (70a, 70b) s'étend radialement à l'extérieur sur le pot (40) de l'actionneur de commutation (30).
